# EUROPÄISCHE PATENTSCHRIFT

(11) **EP 2 540 524 B1**
(45) Veröffentlichungstag und Bekanntmachung des Hinweises auf die Patenterteilung: **29.10.2014**
(21) Anmeldenummer: 12170126.2
(22) Anmeldetag: 31.05.2012
(51) Int. Cl.: B60B 35/04, B60B 35/08, B60G 11/18, B60G 21/05, F16F 1/14

(54) **Achskörper und Achsaggregat für einen LKW oder einen LKW-Anhänger**
Axle body and axle assembly for HGV or HGV trailers
Corps d'essieu et agrégat d'essieu pour un poids-lourd ou une remorque de poids lourd

(30) Priorität: 29.06.2011 DE 102011078335
(43) Veröffentlichungstag der Anmeldung: 02.01.2013
(73) Patentinhaber: SAF-HOLLAND GmbH, 63856 Bessenbach (DE)
(72) Erfinder: Weber, Karsten, 63741 Aschaffenburg (DE); Christ, Armin, 63856 Bessenbach (DE)
(74) Vertreter: Müller Schupfner & Partner Patent- und Rechtsanwaltspartnerschaft mbB

(56) Entgegenhaltungen:
- WO-A1-2009/053491
- DE-A1-102006 015 671

## Beschreibung

Die Erfindung betrifft einen Achskörper für ein Nutzfahrzeug, wie ein Lastkraftwagen (LKW) oder ein Lastkraftwagen-Anhänger (LKW-Anhänger), wozu insbesondere auch ein Sattelauflieger zählt, gemäß der im Oberbegriff des Anspruchs 1 näher angegebenen Art. Die Erfindung betrifft ferner ein Achsaggregat für ein Nutzfahrzeug, wie ein LKW oder ein LKW-Anhänger.

Ein Achskörper der betreffenden Art dient der Aufhängung von Rädern an einem Nutzfahrzeug. Typischerweise ist ein solcher Achskörper als starrer Hohlkörper ausgebildet, der eine axiale Längserstreckung aufweist. Ein derartiger Achskörper kann insofern auch als Achsrohr bezeichnet werden. An den Stirnseiten des Achskörpers bzw. Achsrohrs befinden sich die Radnaben zur Befestigung der Räder. Der Achskörper selbst wird an zwei axial beabstandeten Anbindungspunkten mittels Führungslenkern mit dem Nutzfahrzeug-Rahmen verbunden.

Im Fahrbetrieb kann es bspw. aufgrund einseitigen Einfederns zu Wank-, Versatz-und/oder Rollbewegungen des starren Achskörpers kommen. Um solche Bewegungen des starren Achskörpers zu ermöglichen, sind aus dem Stand der Technik verschiedene Ansätze bekannt. Bspw. ist es bekannt, die Führungslenker flexibel auszugestalten und diese z. B. aus Federstahl herzustellen. Ferner ist es bekannt, großzügig dimensionierte Elastomerbauteile im Kraftflussbereich zwischenzuschalten (z. B. Verwendung von Gummibuchsen am Anbindungspunkt der Führungslenker am Rahmen). Die bekannten Ansätze haben jedoch nachteiligen Einfluss auf das Fahrverhalten, wie insbesondere auf die Spurtreue und die Seitenführung.

Die gattungsbildende DE 10 2006 015 671 A1 betrifft einen Fahrzeug-Achskörper, bei welchem zwischen den Längslenkern ein Querrohr angeordnet ist, welches auf zumindest einem Längsabschnitt mit einem eine Torsion ermöglichendem Querschnitt versehen ist.

Die WO 2009/053491 A1 betrifft ein Achsaggregat für ein Nutzfahrzeug mit einer aus einem ersten Metallwerkstoff gefertigten Achse und mit mindestens einem aus einem zweiten Metallwerkstoff gefertigten Längslenker, wobei die Achse und der Längslenker drehfest miteinander verbunden sind.

Der Erfindung liegt daher die Aufgabe zugrunde, neue Konzepte oder Wege aufzuzeigen, wie Wank-, Versatz- und/oder Rollbewegungen eines starren Achskörpers für ein Nutzfahrzeug ermöglicht werden können.

Diese Aufgabe wird gelöst von einem erfindungsgemäßen Achskörper mit den Merkmalen des Anspruchs 1. Die vom Anspruch 1 abhängigen Ansprüche betreffen bevorzugte Weiterbildungen und Ausgestaltungen des erfindungsgemäßen Achskörpers.

Der erfindungsgemäße Achskörper, wobei es sich um einen starren Hohlkörper mit einer axialen Längserstreckung handelt, zeichnet sich dadurch aus, dass dieser durchgängig oder zumindest in einem axialen Abschnitt mit einer Profilierung ausgebildet ist, wobei diese Profilierung (zumindest in dem betreffenden axialen Abschnitt oder aber über die gesamte axiale Länge des Achskörpers) aufgrund ihrer geometrischen Gestaltung einerseits zu einer geringen Torsionssteifigkeit und andererseits zu einer hohen Biegesteifigkeit führt.

Eine Profilierung im Sinne der Erfindung zeichnet sich durch eine komplexe Querschnittsfläche bzw. Querschnittsgeometrie aus. Eine komplexe Querschnittsgeometrie ist dadurch gekennzeichnet, dass diese mit ihrer Innenkontur und/oder Auβenkontur von einer einfachen geometrischen Grundform (wie insbesondere Kreis, Dreieck, Rechteck bzw. Quadrat) und bevorzugt auch von einer sonstigen geometrischen Grundform (wie insbesondere Oval bzw. Ellipse, Raute, Trapez und dergleichen, sowie gegebenenfalls auch regelmäßiger Polygone) abweicht.

Durch die gezielte geometrische Ausgestaltung der Profilierung werden die unterschiedlichen Anforderungen an eine geringe Torsionssteifigkeit und an eine hohe Biegesteifigkeit zusammengeführt. Dies gelingt im Wesentlichen durch die geometrische Gestaltung der komplexen Querschnittfläche. Durch die Anordnung und Verteilung einzelner Flächenanteile kann nach den bekannten Regeln einerseits ein hohes Widerstandsmoment gegen Biegung und andererseits ein niedriges bzw. geringes Widerstandsmoment gegen Torsion erzielt werden. Ein niedriges Widerstandsmoment gegen Torsion und eine damit einhergehende geringe Torsionssteifigkeit ist hierbei vorrangig als verhältnisbezogene Angabe zu verstehen, wobei insbesondere ein Kreisringquerschnitt gleicher Fläche zugrunde gelegt wird. Der erfindungsgemäße Achskörper soll demnach zumindest lokal in dem profilierten axialen Abschnitt gegenüber einem Achskörper mit Kreisringquerschnitt gleicher Fläche eine niedrigere Torsionssteifigkeit aufweisen. Ebenso ist auch ein hohes Widerstandsmoment gegen Biegung und eine damit einhergehende hohe Biegesteifigkeit vorrangig als verhältnisbezogene Angabe zu verstehen, wobei auch hier insbesondere ein Kreisringquerschnitt mit gleicher Fläche zugrunde gelegt wird. Der erfindungsgemäße Achskörper soll demnach zumindest lokal in dem profilierten axialen Abschnitt gegenüber einem Achskörper mit Kreisringquerschnitt gleicher Fläche eine zumindest annähernd gleich hohe oder sogar höhere Biegesteifigkeit aufweisen.

Eine Idee der Erfindung ist es, durch die oben angegebenen Maßnahmen einen starren Achskörper bereitzustellen, der durch eine Profilierung mit komplexer Querschnittsgeometrie, zumindest lokal, einerseits eine hohe Biegesteifigkeit und andererseits eine niedrige bzw. geringe Torsionssteifigkeit aufweist. Damit lässt sich der erfindungsgemäße Achskörper im Vergleich zu einem herkömmlichen Achskörper weitgehend verschleißfrei stärker tordieren und kann damit Wank-, Versatz- und/oder Rollbewegungen abfangen. Etwaige Gummibuchsen (wie eingangs erläutert) können damit entfallen oder zumindest kleiner dimensioniert werden. Ferner ergibt sich eine gleichförmigere Rollstabilisierung, sowie eine bessere und exaktere Spurtreue und Seitenführung für das Nutzfahrzeug, wodurch auch die Fahrsicherheit verbessert wird.

Bevorzugt ist vorgesehen, dass sich die Querschnittsgeometrie der Profilierung über den axialen Verlauf des Achskörpers verändert. Hierunter ist zu verstehen, dass die komplexe Querschnittsgeometrie über dem axialen Verlauf nicht konstant ausgebildet ist. Die Veränderung erfolgt im Wesentlichen durch eine sich über dem axialen Verlauf verändernde Ausgestaltung der Innenkontur und/oder Außenkontur der Querschnittsgeometrie. Die Veränderung kann sich über den gesamten axialen Verlauf des Achskörpers bzw. eines profilierten axialen Abschnitts oder über nur eine axiale Teilstrecke erstrecken. Insbesondere ist vorgesehen, dass die Veränderung der komplexen Querschnittsgeometrie kontinuierlich und damit kantenfrei ausgebildet ist.

Ferner ist bevorzugt vorgesehen, dass der erfindungsgemäße Achskörper mehrere axiale Abschnitte umfasst, wobei wenigstens zwei benachbarte axiale Abschnitte eine unterschiedliche Querschnittsgeometrie aufweisen. Bevorzugt ist vorgesehen, dass wenigstens einer dieser axialen Abschnitte mit einer komplexen Querschnittsgeometrie ausgebildet ist. Die unterschiedliche geometrische Gestaltung der Querschnittsgeometrien kann z. B. die Form bzw. Kontur, die Größe und/oder die durch den Verlauf von Innenkontur und Außenkontur definierte Wandstärke umfassen. Insbesondere ist vorgesehen, dass die Übergänge zwischen den benachbarten axialen Abschnitten kontinuierlich und damit kantenfrei ausgebildet sind. Ferner ist denkbar, dass die Querschnittsgeometrie bzw. die Querschnittsgeometrien und insbesondere komplexen Querschnittsgeometrien in wenigstens einem axialen Abschnitt über dem axialen Verlauf nicht konstant ausgebildet sind, wozu auf die diesbezüglichen vorausgehenden Erläuterungen verwiesen wird.

Der erfindungsgemäße Achskörper kann, insbesondere in seinem axialen Mittenbereich, mit einer Taillierung ausgebildet sein. Eine derartige Taillierung lässt sich z. B. durch eine über dem axialen Verlauf kontinuierliche Veränderung der Querschnittsgeometrie und insbesondere der komplexen Querschnittsgeometrie realisieren.

Ferner kann der erfindungsgemäße Achskörper zu einer zur Längsachse senkrechten Mittellinie symmetrisch ausgebildet sein. Eine symmetrische Ausbildung ist z. B. im Hinblick auf symmetrische Belastungsreaktionen von Vorteil.

Bevorzugt ist vorgesehen, dass die Profilierung eine Querschnittsgeometrie aufweist, bei der die Innenkontur und/oder die Außenkontur als Rundwellenprofil ausgebildet ist/sind. Alternativ kann die Profilierung eine Querschnittsgeometrie mit wenigstens einem innenliegenden bzw. zentralen Abschnitt und mehreren hiervon radial nach außen ragenden Formabschnitten aufweisen. Diese beiden möglichen Profilierungsarten werden nachfolgend im Zusammenhang mit den Figuren noch näher erläutert.

Bevorzugt ist vorgesehen, dass der erfindungsgemäße Achskörper über seinen axialen Verlauf, zumindest zwischen den Anbindungspunkten für die Führungslenker, unbeachtlich einzelner axialer Abschnitte und/oder einer sich über dem axialen Verlauf verändernden Profilierung, mit einem in etwa gleichbleibenden Widerstandsmoment gegen Biegung ausgebildet ist. Durch eine unsymmetrische Ausgestaltung der Querschnittsgeometrie bzw. Querschnittsgeometrien können in Abhängigkeit von der Belastungsrichtung unterschiedliche Widerstandsmomente gegen Biegung erreicht werden, wodurch eine Anpassung an gegebene unterschiedliche Anforderungen (bspw. in horizontaler oder vertikaler Belastungsrichtung) möglich ist.

Erfindungsgemäß ist der Achskörper aus einem Gusswerkstoff bzw. -material gefertigt. Als Gusswerkstoffe kommen insbesondere ein Eisengusswerkstoff oder ein Stahlgusswerkstoff in Betracht. Näheres wird nachfolgend im Zusammenhang mit den Figuren erläutert. Nicht erfindungsgemäß kann der Achskörper zumindest bereichsweise auch aus einem Verbundfaserwerkstoff (bspw. Karbon) ausgebildet sein.

Der Achskörper kann einstückig ausgebildet sein. Alternativ kann der Achskörper auch mehrteilig ausgebildet sein, wobei die Einzelsegmente vorteilhafterweise reversibel oder irreversibel miteinander verbunden sind.

Mit dem nebengeordneten Anspruch erstreckt sich die Lösung der Aufgabe auch auf ein Achsaggregat für ein Nutzfahrzeug, wie einen LKW oder einen LKW-Anhänger, das neben weiteren Komponenten (wie z. B. Führungslenkern, Radnaben etc.) wenigstens einen erfindungsgemäßen Achskörper umfasst bzw. auf weist. Ein derartiges Achsaggregat kann z. B. als komplette und verbaufertige Baueinheit bereit gestellt werden.

So kann der Führungslenker insbesondere derart ausgebildet sein, dass dieser mit einem erfindungsgemäßen Achskörper zusammenwirkt. In anderen Worten kann der Führungslenker in seinem Aufnahmebereich für den Achskörper eine Geometrie aufweisen, die im wesentlichen kongruent zum Achskörper in der Anbindungsstelle ist. So kann die Achsöffnung im Führungslenker eine Innen-(Umfangs-)geometrie aufweisen, die der Außenumfangsgeometrie des Achskörpers im Anbindungsbereich entspricht bzw. hierzu kongruent ist. Beispielsweise können die Innen- und Außenprofilierungen des Führungslenkers und des Achskörpers ineinandergreifen.

Weitere Merkmale und Vorteile der Erfindung ergeben sich aus der nachfolgenden Beschreibung von Ausführungsbeispielen anhand der Figuren. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.
- Fig. 1: zeigt in einer Draufsicht ein Achsaggregat für einen LKW oder LKW-Anhänger gemäß dem Stand der Technik.
- Fig. 2: zeigt in mehreren Einzeldarstellungen ein erstes Ausführungsbeispiel eines erfindungsgemäßen Achskörpers.
- Fig. 3: zeigt in einer Seitenansicht ein zweites Ausführungsbeispiel eines erfindungsgemäßen Achskörpers.
- Fig. 4: zeigt in einer Seitenansicht ein drittes Ausführungsbeispiel eines erfindungsgemäßen Achskörpers.
- Fig. 5: zeigt in mehreren Einzeldarstellungen ein viertes Ausführungsbeispiel eines erfindungsgemäßen Achskörpers.
- Fig. 6: zeigt in mehreren Einzeldarstellungen ein fünftes Ausführungsbeispiel eines erfindungsgemäßen Achskörpers.
- Fig. 7: zeigt in mehreren Einzeldarstellungen ein sechstes Ausführungsbeispiel eines erfindungsgemäßen Achskörpers.
- Fig. 8: zeigt in mehreren Einzeldarstellungen ein siebtes Ausführungsbeispiel eines erfindungsgemäßen Achskörpers.
- Fig. 9: zeigt in mehreren Einzeldarstellungen ein achtes Ausführungsbeispiel eines erfindungsgemäßen Achskörpers.

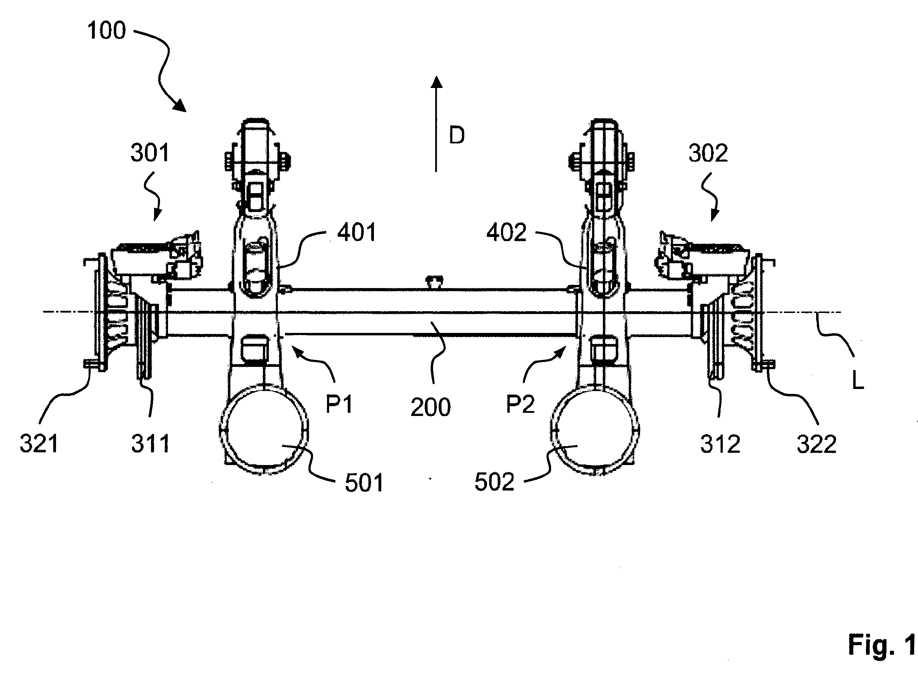

**Fig. 1** zeigt ein insgesamt mit 100 bezeichnetes Achsaggregat für einen LKW oder LKW-Anhänger. Die gewöhnliche Fahrtrichtung ist mit dem Pfeil D angegeben. Das Achsaggregat 100 umfasst einen starren und sich axial erstreckenden Achskörper 200 mit einer linken Radnabe 301 und einer rechten Radnabe 302 die an den Stirnseiten dieses Achskörpers 200 angeordnet sind und die jeweils eine Scheibenbremse 311 bzw. 312 und einen Radanschluss 321 bzw. 322 aufweisen. Das Achsaggregat 100 umfasst ferner zwei Führungslenker 401 und 402, die an axial beabstandeten Anbindungspunkten P1 und P2 fest am Achskörper 200 angebunden sind und die der Verbindung des Achskörpers 200 mit dem LKW-Rahmen bzw. Anhänger-Rahmen dienen. Mit 501 und 502 sind zwei Federbälge bezeichnet.

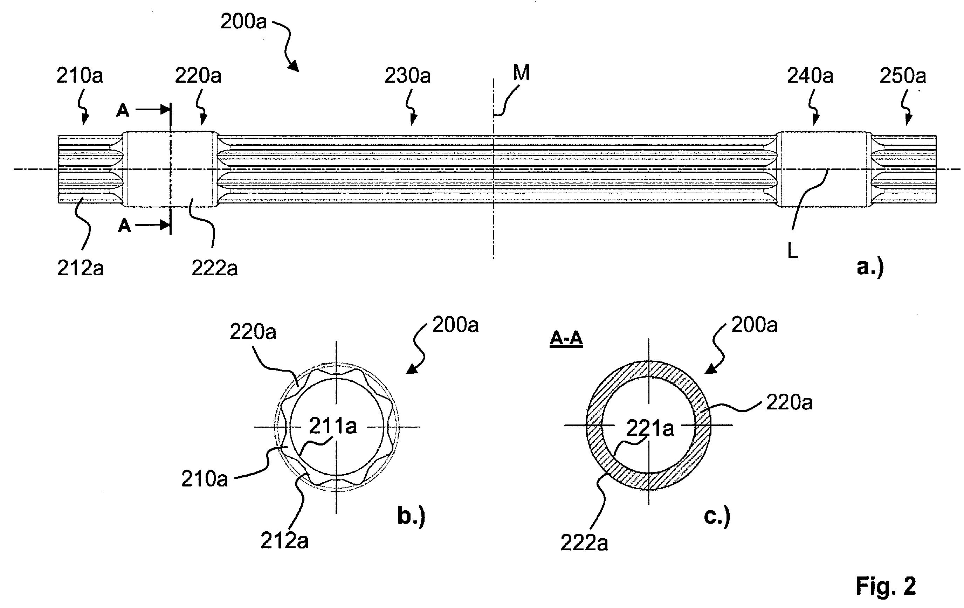

Der Achskörper 200 des in Fig. 1 gezeigten Achsaggregats 100 ist als gerade verlaufendes Achsrohr ausgebildet. Die Längsachse des Achskörpers bzw. Achsrohrs 200 ist mit L angegeben. Ein solches Achsrohr weist typischerweise eine kreisringförmige oder rechteckrahmenförmige Querschnittsfläche bzw. Querschnittsgeometrie auf. Im Folgenden werden im Zusammenhang mit den Figuren 2 bis 9 mehrere erfindungsgemäße Ausführungsbeispiele für einen am Achsaggregat 100 verwendbaren bzw. verbaubaren rohrartigen Achskörper 200a bis 200h erläutert, die gegenüber dem in Fig. 1 gezeigten Achskörper 200 diverse Vorteile aufweisen, wie obenstehend und auch nachfolgend erläutert.

**Fig. 2**a zeigt in einer Seitenansicht einen Achskörper 200a. Der Achskörper 200a weist mehrere axiale Abschnitte 210a bis 250a auf. Die beiden außenliegenden axialen Abschnitte 210a und 250a sowie der mittlere axiale Abschnitt 230a sind als profilierte axiale Abschnitte mit einer identischen Profilierung ausgebildet. In diesen profilierten axialen Abschnitten 210a, 230a und 250a ist der Achskörper 200a als Rundwellen-Hohlprofil ausgebildet, was anschaulich aus der in Fig. 2b gezeigten axialen Draufsicht hervorgeht. Gemäß den obenstehenden Erläuterungen handelt es sich hierbei um eine Profilierung mit einer komplexen Querschnittsgeometrie. Die komplexe Querschnittsgeometrie weist eine kreisrunde Innenkontur 211a und eine sternförmige Außenkontur 212a auf (siehe Fig. 2b). Durch den Verlauf der Innenkontur 211 a und der Außenkontur 212a ist an jedem Punkt die Wandstärke bestimmt. In den unprofilierten axialen Abschnitten 220a und 240a, die der Anbindung der beiden Führungslenker 401 und 402 dienen (siehe Fig. 1), ist der Achskörper 200a mit einer kreisringförmigen Querschnittsgeometrie ausgebildet, was anschaulich aus der in Fig. 2c gezeigten Schnittdarstellung (gemäß dem in Fig. 2a angegebenen Schnittverlauf A-A) hervorgeht. Die kreisrunde Innenkontur und die kreisrunde Außenkontur sind mit 221 a und 222a bezeichnet. Die Übergänge zwischen den einzelnen axialen Abschnitten 210a/220a, 220a/230a, 230a/240a und 240a/250a sind kantenfrei und kraftflussoptimiert ausgebildet, was gleichermaßen für die nachfolgenden Ausführungsbeispiele gilt. Ferner ist der Achskörper 200a zu einer zu der Längsachse L senkrechten Mittellinie M symmetrisch ausgebildet, was ebenso für die nachfolgenden Ausführungsbeispiele gilt.

Der Achskörper 200a weist in den profilierten axialen Abschnitten 210a, 230a und 250b gegenüber den unprofilierten axialen Abschnitten 220a und 240a eine geringere bzw. niedrigere Torsionssteifigkeit auf. Die niedrigere Torsionssteifigkeit ergibt sich aus der geometrischen Gestaltung einer komplexen Querschnittsgeometrie. Durch die Reduzierung der äußeren Flächenanteile gegenüber der Außenkontur 222a der unprofilierten axialen Abschnitte 220a bzw. 240a (siehe Fig. 2b) wird nach den bekannten Regeln eine Verringerung des Widerstandsmoments gegen Torsion erreicht. Andererseits entspricht die Biegesteifigkeit in den profilierten axialen Abschnitten 210a, 230a und 250a in etwa der Biegesteifigkeit der unprofilierten axialen Abschnitte 220a und 240a. Dies wird durch das punktuelle Heranführen der äußeren Konturbereiche der Außenkontur 212a an die kreisrunde Außenkontur 222a der unprofilierten axialen Abschnitte 220a bzw. 240a (siehe Fig. 2b) erreicht. Der Achskörper 200a ist damit über seinem gesamten axialen Verlauf (L) im Wesentlichen mit einem gleichbleibenden Widerstandsmoment gegen Biegung ausgebildet, weist jedoch in den profilierten axialen Abschnitten 210a, 230a und 250a gegenüber den unprofilierten axialen Abschnitten 220a und 240a ein reduziertes Widerstandsmoment gegen Torsion auf.

Gemäß den vorausgehenden Erläuterungen weist der profiliert ausgebildete mittlere axiale Abschnitt 230a über seiner gesamten axialen Länge eine verhältnismäßig geringere Torsionssteifigkeit auf. Der Achskörper 200a kann damit in dem zwischen den unprofilierten axialen Abschnitten 220a und 240a, die für die Anbindung der beiden Führungslenker 401 und 402 vorgesehen sind (siehe Fig. 1), stärker tordiert werden als das in Fig. 1 gezeigte Achsrohr 200, um Wank-, Versatz- und/oder Rollbewegungen abzufangen. Da der mittlere profilierte Abschnitt 230a verhältnismäßig lang ausgebildet ist, kann auch eine große axiale Länge für die Torsion (bzw. Tordierung) zwischen den Führungslenkern 401 und 402 genutzt werden, was bei einer gleichmäßigen Torsion verhältnismäßig geringe lokale Dehnungen im Material zur Folge hat. Dadurch können lokale Spannungsspitzen vermieden werden, was z. B. im Hinblick auf die Lebensdauer des Achskörpers 200a vorteilig ist. Ferner kann der Achskörper 200a aus Materialien gefertigt werden, wie insbesondere aus metallischen Gusswerkstoffen (z. B. Eisenguss, Stahlguss und dergleichen), die bei flüchtiger Betrachtung zunächst nicht geeignet erscheinen.

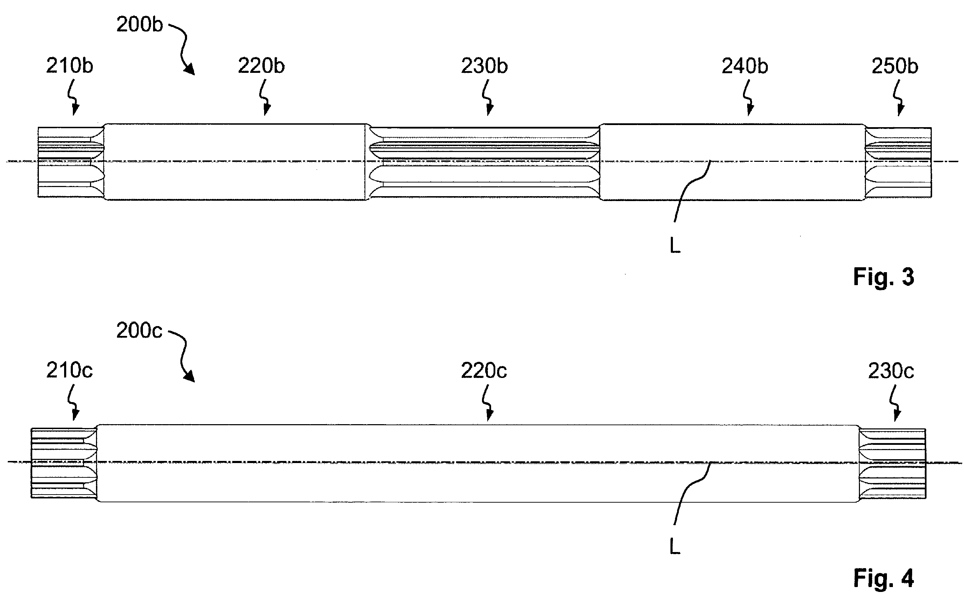

Bei der Gestaltung einer komplexen Querschnittsgeometrie für die profilierten axialen Abschnitte 210a, 230a und 250a ist ein anforderungsgerechter Kompromiss zwischen einem hohen Widerstandsmoment gegen Biegung und einem geringen Widerstandsmoment gegen Torsion zu finden. Ferner ist zu beachten, dass insbesondere das Widerstandsmoment gegen Biegung eine Richtungsabhängigkeit hat. Durch Variation der axialen Länge der einzelnen axialen Abschnitte 210a bis 250a kann die Torsionssteifigkeit zwischen zwei axial beabstandeten Punkten konstruktiv eingestellt werden, wie nachfolgend anhand dem in Fig. 3 gezeigten Ausführungsbeispiel erläutert. Im Übrigen wird durch die Profilierung auch eine Gewichtsreduktion gegenüber dem in Fig. 1 gezeigten Achsrohr 200 erreicht.

Der in **Fig. 3** gezeigte Achskörper 200b unterscheidet sich zu dem in Fig. 2 gezeigten Achskörper 200a dadurch, dass die zwischen den profilierten axialen Abschnitten 210b bzw. 250b und dem mittleren axialen Abschnitt 230b liegenden unprofilierten axialen Abschnitte 220b und 240b breiter bzw. axial länger ausgebildet sind, wodurch der profiliert ausgebildete mittlere axiale Abschnitt 230b schmaler bzw. axial kürzer ausfällt. Der Achskörper 200b verhält sich dadurch in seinem axialen Mittenbereich, der sich im verbauten Zustand zwischen den beiden Führungslenkern 401 und 402 befindet (siehe Fig. 1), torsionssteifer als der in Fig. 2 gezeigte Achskörper 200a, jedoch torsionsweicher als das in Fig. 1 gezeigte Achsrohr 200. Ferner verteilt sich eine stattfindende Torsion nicht gleichmäßig zwischen den Anbindungspunkten P1 und P2 für die Führungslenker 401 und 402, sondern erstreckt sich im Wesentlichen nur auf den verhältnismäßig kurz ausgebildeten mittleren axialen Abschnitt 230b. Die unprofilierten axialen Abschnitte 220b und 240b können hierbei gegebenenfalls torsionsfrei bleiben. Im Übrigen gelten analog die vorausgehenden Erläuterungen im Zusammenhang mit dem in Fig. 2 gezeigten Ausführungsbeispiel.

Der in **Fig. 4** gezeigte Achskörpers 200c unterscheidet sich zu dem in Fig. 2 gezeigten Achskörper 200a dadurch, dass dieser nur drei axiale Abschnitte 210c, 220c und 230c aufweist. Die beiden außenliegenden axialen Abschnitte 210c und 230c sind mit einer Profilierung ausgebildet, weshalb diese axialen Abschnitte torsionsweicher als das in Fig. 1 gezeigte Achsrohr 200 sind. Der mittlere axiale Abschnitt 220c ist ohne Profilierung ausgebildet. Der Achskörper 200c verhält sich daher in seinem axialen Mittenbereich, der sich im verbauten Zustand zwischen den beiden Führungslenkern 401 und 402 befindet (siehe Fig. 1), wie das in Fig. 1 gezeigte herkömmliche Achsrohr 200. Im Übrigen gelten analog die vorausgehenden Erläuterungen im Zusammenhang mit dem in Fig. 2 gezeigten Ausführungsbeispiel.

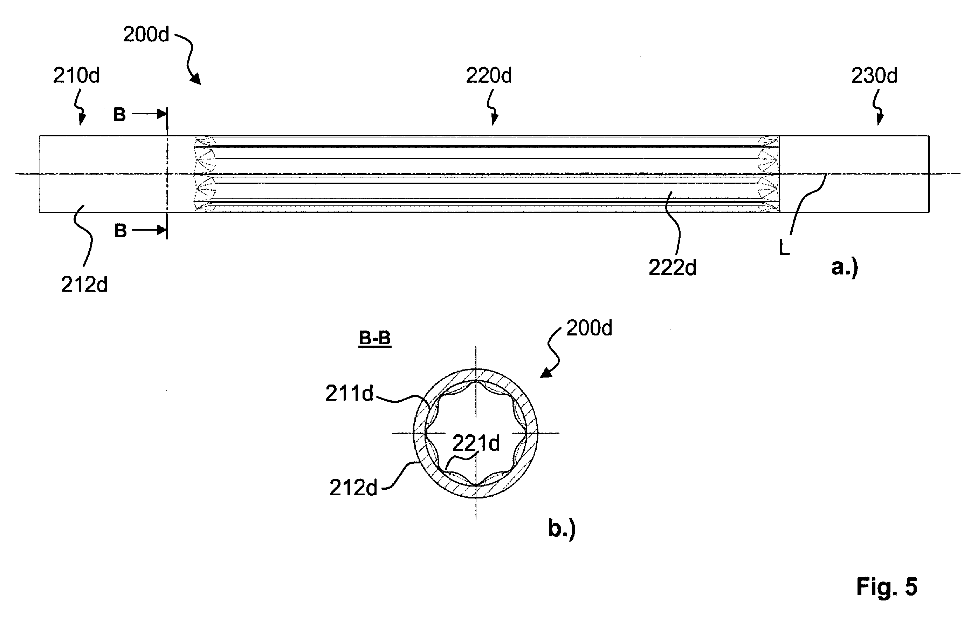

**Fig. 5**a zeigt in einer Seitenansicht einen Achskörper 200d mit drei axialen Abschnitten 210d, 220d und 230d. Die außenliegenden axialen Abschnitte 210d und 230d sind als unprofilierte Abschnitte mit einer kreisringförmigen Querschnittsgeometrie ausgebildet, was anschaulich aus der in Fig. 5b gezeigten Schnittdarstellung (gemäß dem in Fig. 5a angegebenen Schnittverlauf B-B) hervorgeht. Die kreisrunde Innenkontur und die kreisrunde Außenkontur sind mit 211d und 212d bezeichnet. Der mittlere axiale Abschnitt 220d, der sich im verbauten Zustand zwischen den beiden Führungslenkern 401 und 402 befindet (siehe Fig. 1), weist eine Profilierung mit einer komplexen Querschnittsgeometrie auf, was ebenfalls anschaulich aus der in Fig. 5b gezeigten Schnittdarstellung hervorgeht. Die komplexe Querschnittsgeometrie weist sowohl eine sternförmige Innenkontur 221 d (siehe Fig. 5b) als auch eine sternförmige Außenkontur 222d (siehe Fig. 5a) auf. Im Übrigen gelten analog die vorausgehenden Erläuterungen im Zusammenhang mit den anderen Ausführungsbeispielen und insbesondere im Zusammenhang mit dem in Fig. 2 gezeigten Ausführungsbeispiel.

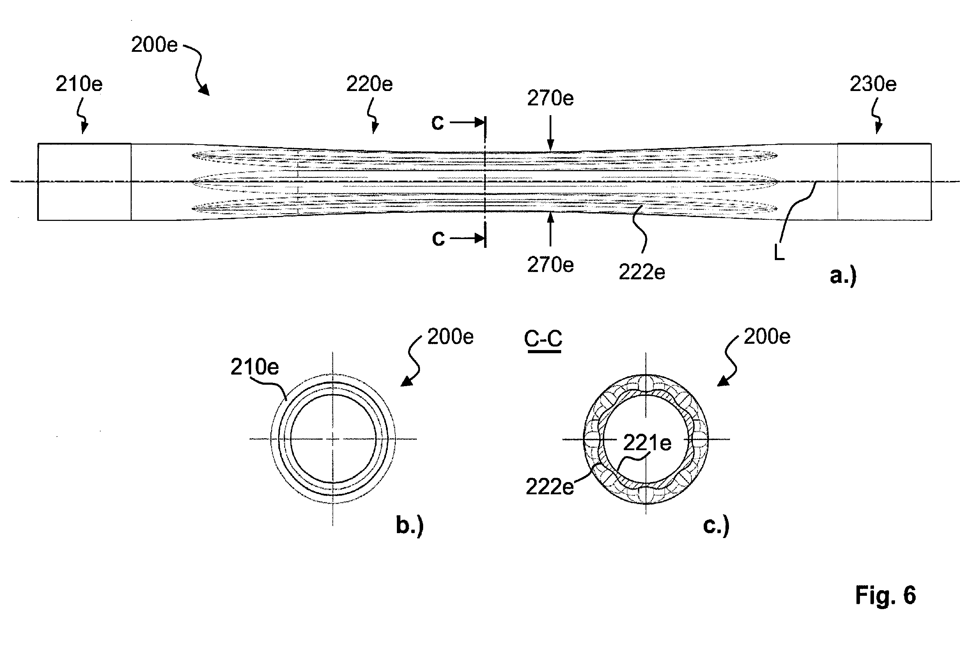

**Fig. 6**a zeigt in einer Seitenansicht einen Achskörper 200e, der ebenfalls mit drei axialen Abschnitten 210e, 220e und 230e ausgebildet ist. Die außenliegenden axialen Abschnitte 210e und 230e sind unprofiliert mit einer kreisringförmigen Querschnittsgeometrie ausgebildet, was anschaulich aus der in Fig. 6b gezeigten axialen Draufsicht hervorgeht. Der mittlere axiale Abschnitt 220e ist mit komplexer Querschnittsgeometrie profiliert ausgebildet, was anschaulich aus der in Fig. 6c gezeigten Schnittdarstellung (gemäß dem in Fig. 6a angegebenen Schnittverlauf C-C) hervorgeht. Die komplexe Querschnittsgeometrie weist eine kreisrunde Innenkontur 221 e und eine sternförmige Außenkontur 222e auf (siehe Fig. 6c). Abweichend zu den vorausgehenden Ausführungsbeispielen ist der mittlere axiale Abschnitt 220e mit einer sich über dem axialen Verlauf verändernden komplexen Querschnittsgeometrie ausgebildet. Durch eine kontinuierliche (d. h. nicht sprunghafte) Verringerung des Außendurchmessers zur axialen Mitte hin (was gleichfalls auch eine Verringerung des Innendurchmessers der Innenkontur 221 e bedeutet) wird eine Taillierung 270e des Achskörpers 200e im axialen Mittenbereich erreicht. Damit sind sowohl das Widerstandsmoment gegen Torsion als auch das Widerstandsmoment gegen Biegung über dem axialen Verlauf des mittleren axialen Abschnitts 220e nicht konstant. Aufgrund der Taillierung 270e verhält sich der Achskörper 200e in seinem axialen Mittenbereich, der sich im verbauten Zustand zwischen den beiden Führungslenkern 401 und 402 befindet (siehe Fig. 1), torsionsweicher als ein untaillierter Achskörper. Im Übrigen gelten analog die vorausgehenden Erläuterungen im Zusammenhang mit den anderen Ausführungsbeispielen.

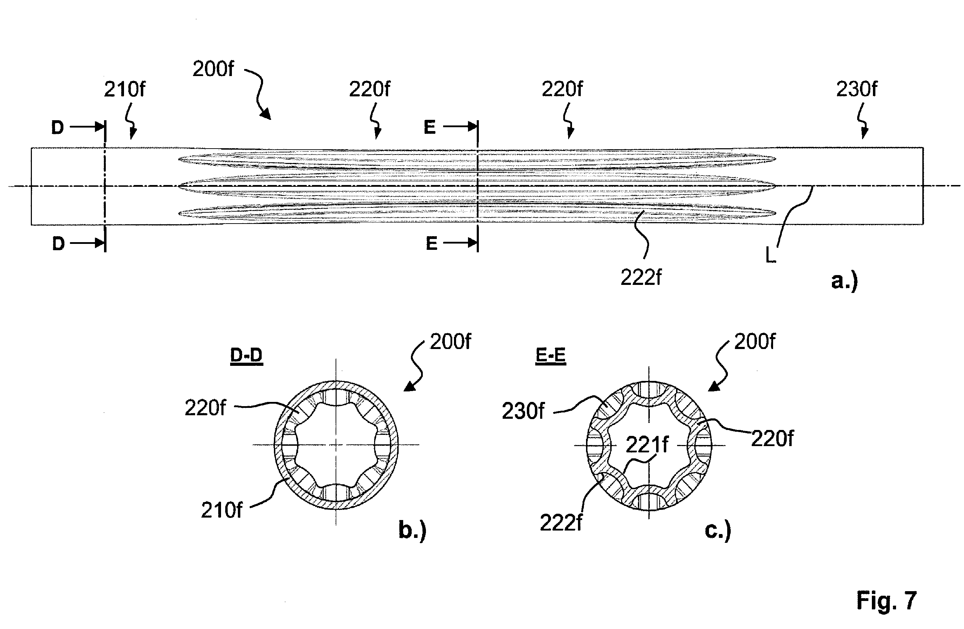

**Fig. 7**a zeigt in einer Seitenansicht einen Achskörper 200f, der dem in Fig. 6 gezeigten Achskörper 200e entsprechend mit drei axialen Abschnitten 210f, 220f und 230f ausgebildet ist. Der mittlere axiale Abschnitt 220f ist mit komplexer Querschnittsgeometrie profiliert ausgebildet, was anschaulich aus den in Fig. 7a und Fig. 7b gezeigten Schnittdarstellungen (gemäß den in Fig. 7a angegebenen Schnittverläufen D-D und E-E) hervorgeht. Die komplexe Querschnittsgeometrie weist sowohl eine sternförmige Innenkontur 221f als auch eine sternförmige Auβenkontur 222f auf (siehe Fig. 7c). Der Achskörper 200f ist in seinem mittleren axialen Abschnitt 220f mit einer sich über dem axialen Verlauf (L) verändernden komplexen Querschnittsgeometrie ausgebildet. Abweichend zu dem in Fig. 6 gezeigten Achskörper 200e wird die Veränderung der komplexen Querschnittsgeometrie im mittleren axialen Abschnitt 220f nicht über eine Verringerung des Auβendurchmessers, sondern durch eine kontinuierliche Veränderung der Außenkontur 222f (was gleichfalls auch eine Veränderung der Innenkontur 221f bedeutet) realisiert, derart, dass zur axialen Mitte hin die äußeren Flächenanteile der komplexen Querschnittsgeometrie kontinuierlich (d. h. nicht sprunghaft) reduziert werden, wodurch eine zunehmende Verringerung des Widerstandsmoments gegen Torsion erreicht wird (wie bereits obenstehend erläutert). Wie auch bei dem in Fig. 6 gezeigten Achskörper 200e nimmt somit das Widerstandsmoment gegen Torsion zur axialen Mitte hin ab. Im Gegensatz zu dem in Fig. 6 gezeigten Achskörper 200e bleibt jedoch das Widerstandsmoment gegen Biegung über dem axialen Verlauf des mittleren axialen Abschnitts 220f im Wesentlichen konstant, was durch den Verlauf der äußeren Konturbereiche der Außenkontur 222f erreicht wird (wie bereits obenstehend erläutert). Im Übrigen gelten analog die vorausgehenden Erläuterungen im Zusammenhang mit den anderen Ausführungsbeispielen und insbesondere im Zusammenhang mit dem in Fig. 6 gezeigten Ausführungsbeispiel.

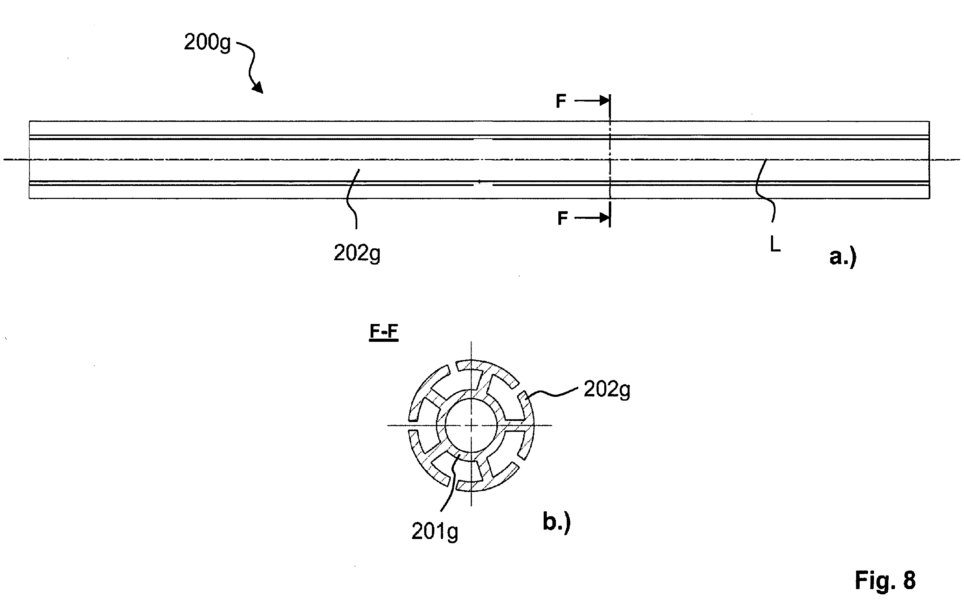

**Fig. 8**a zeigt in einer Seitenansicht einen Achskörper 200g der durchgängig mit einer Profilierung ausgebildet ist. Die Querschnittsgeometrie der Profilierung, wobei es sich gemäß den obenstehenden Erläuterungen um eine komplexe Querschnittsgeometrie handelt, geht anschaulich aus der in Fig. 8b gezeigten Schnittdarstellung (gemäß dem in Fig. 8a angegebenen Schnittverlauf F-F) hervor. Nach den bekannten Regeln wird das aus dieser komplexen Querschnittsgeometrie resultierende Widerstandsmoment gegen Torsion weitgehend durch den innenliegenden bzw. zentralen Kreisringabschnitt 201g bestimmt. Das Widerstandsmoment gegen Biegung wird weitgehend durch die T-förmig ausgebildeten und vom Kreisringabschnitt 201g radial nach außen ragenden Formabschnitte 202g bestimmt. Im Vergleich zu einem herkömmlichen Achskörper 200 mit einer kreisringförmigen Querschnittsfläche (siehe Fig. 1) gleichen Durchmessers weist der Achskörper 200g in etwa die gleiche Biegesteifigkeit bei einer deutlich geringeren Torsionssteifigkeit auf. Die Anbindung der Führungslenker 401 und 402 (siehe Fig. 1) kann z. B. durch aufgeschobene Hülse bewerkstelligt werden.

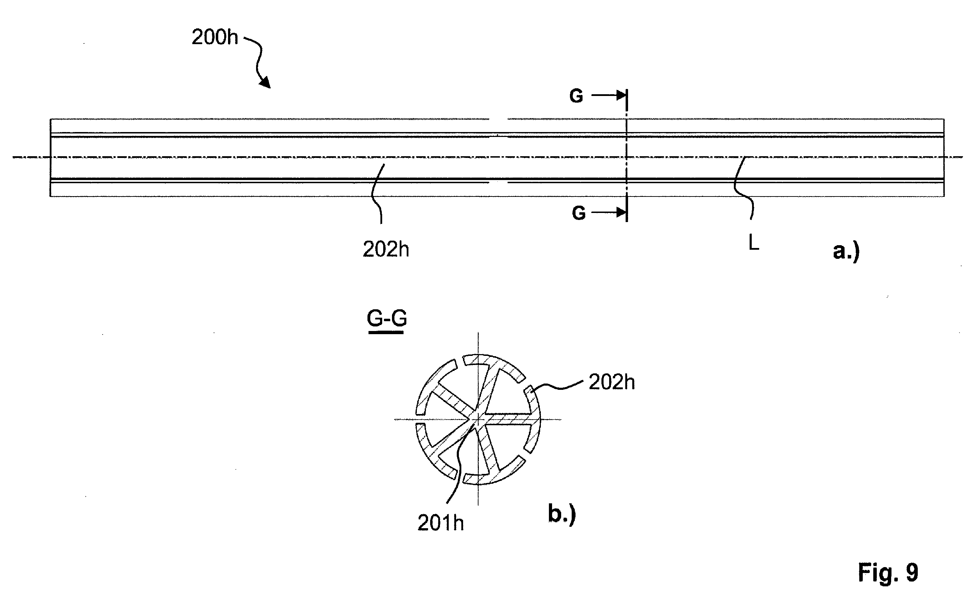

**Fig. 9**a zeigt in einer Seitenansicht einen Achskörper 200h der dem in Fig. 8 gezeigten Achskörper 200h entsprechend durchgängig mit einer Profilierung ausgebildet ist. Die Querschnittsgeometrie der Profilierung geht anschaulich aus der in Fig. 9b gezeigten Schnittdarstellung (gemäß dem in Fig. 9a angegebenen Schnittverlauf G-G) hervor, wobei es sich gemäß den obenstehenden Erläuterungen um eine komplexe Querschnittsgeometrie handelt. Abweichend zu dem in Fig. 8 gezeigten Ausführungsbeispiel umfasst die komplexe Querschnittsgeometrie lediglich mehrere T-förmig ausgebildete und vom innenliegenden bzw. zentralen Abschnitt 201 h radial nach außen ragende Abschnitte 202g auf. Im Vergleich zu dem in Fig. 8 gezeigten Ausführungsbeispiel weist der Achskörper 200h bei in etwa gleicher Biegesteifigkeit eine geringere Torsionssteifigkeit auf. Im Übrigen gelten analog die vorausgehenden Erläuterungen im Zusammenhang mit dem in Fig. 8 gezeigten Ausführungsbeispiel.

## Patentansprüche

1. Achskörper (200a,...,200h) für ein Nutzfahrzeug, wie einen LKW oder einen LKW-Anhänger, der starr und mit einer axialen Längserstreckung (L) ausgebildet ist und der insbesondere an zwei axial beabstandeten Anbindungspunkten (P1, P2) mittels Führungslenkern (401, 402) mit dem Nutzfahrzeug-Rahmen verbindbar ist, wobei dieser Achskörper durchgängig oder zumindest in einem axialen Abschnitt mit einer Profilierung ausgebildet ist, die aufgrund ihrer geometrischen Gestaltung einerseits zu einer geringeren Torsionssteifigkeit und andererseits zu einer annähernd gleich hohen Biegesteifigkeit als ein Achskörper mit Kreisringquerschnitt gleicher Fläche führt, **dadurch gekennzeichnet, dass**
der Achskörper aus einem Gussmaterial gebildet ist.

2. Achskörper (200e, 200f) nach Anspruch 1, **dadurch gekennzeichnet, dass** sich die Querschnittsgeometrie der Profilierung über dem axialen Verlauf (L) dieses Achskörpers (200e, 200f) verändert.

3. Achskörper (200a,...,200g) nach Anspruch 1 oder 2, **dadurch gekennzeichnet, dass** dieser mehrere axiale Abschnitte umfasst, wobei benachbarte axiale Abschnitte eine unterschiedliche Querschnittsgeometrie aufweisen.

4. Achskörper (200e) nach einem der vorausgehenden Ansprüche, **dadurch gekennzeichnet, dass** dieser eine Taillierung aufweist.

5. Achskörper (200a,...,200h) nach einem der vorausgehenden Ansprüche, **dadurch gekennzeichnet, dass** dieser zu einer zur Längsachse (L) senkrechten Mittellinie (M) symmetrisch ausgebildet ist.

6. Achskörper (200a,...,200g) nach einem der Ansprüche 1 bis 5, **dadurch gekennzeichnet, dass** die Profilierung eine Querschnittsgeometrie aufweist, bei der die Innenkontur und/oder die Außenkontur als Rundwellenprofil ausgebildet ist.

7. Achskörper (200g, 200h) nach Anspruch 1 bis 5, **dadurch gekennzeichnet, dass** die Profilierung eine Querschnittsgeometrie mit wenigstens einem innenliegenden Abschnitt und mehreren hiervon radial nach außen ragenden Formabschnitten aufweist.

8. Achskörper (200a,...,200h) nach einem der vorausgehenden Ansprüche, **dadurch gekennzeichnet, dass** dieser über seinem axialen Verlauf (L), zumindest zwischen den Anbindungspunkten (P1, P2) für die Führungslenker (401, 402), mit einem in etwa gleichbleibenden Widerstandsmoment gegen Biegung ausgebildet ist.

9. Achskörper (200a,...200h) nach einem der vorausgehenden Ansprüche,
**dadurch gekennzeichnet, dass**
dieser aus einem Stahlgussmaterial gebildet ist.

10. Achsaggregat (100) für ein Nutzfahrzeug, wie einen LKW oder einen LKW-Anhänger, umfassend wenigstens einen Achskörper (200a bis 200h) gemäß einem der vorausgehenden Ansprüche.

## Claims

1. Axle body (200a,...,200h) for a commercial vehicle or utility vehicle, such as a HGV or a HGV trailer, which is rigid and has an axial longitudinal extension (L) and which in particular at two axially spaced connection points (P1, P2) may be connected to the frame of the commercial vehicle by means of trailing arms (401, 402), wherein said axle body continuously or at least in an axial portion is provided with a profiling, which, due to its geometric design, in turn causes on the one hand a lower torsional stiffness and on the other hand an almost equally high bending stiffness as an axle body having a circular ring cross-section of the same surface, **characterized in that** the axle body is made from a cast material.

2. The axle body (200e, 200f) of claim 1, **characterized in that** the cross-sectional geometry of the profiling changes along the axial course (L) of said axle body (200e, 200f).

3. The axle body (200a,...,200g) of claim 1 or 2, **characterized in that** said axle body comprises several axial portions, wherein adjacent axial portions have different cross-sectional geometries.

4. The axle body (200e) of any one of the preceding claims, **characterized in that** said axle body has a narrow waist.

5. The axle body (200a,...,200h) of any one of the preceding claims, **characterized in that** said axle body is formed symmetric relative to a central line (M), which is perpendicular to the longitudinal axis (L).

6. The axle body (200a,...,200g) of any one of claims 1 to 5, **characterized in that** the profiling has a cross-sectional geometry, where the inner contour and/or the outer contour is designed as a round shaft profile.

7. The axle body (200g, 200h) of claim 1 to 5, **characterized in that** the profiling has a cross-sectional geometry having at least one inner portion and several mold portions, which radially protrude outwards therefrom.

8. The axle body (200a,...,200h) of any one of the preceding claims, **characterized in that** along its axial course (L), it is designed with an approximately constant modulus of resistance against bending, at least between the connection points (P1, P2) for the trailing arms (401, 402).

9. The axle body (200a,...200h) of any one of the preceding claims, **characterized in that** said axle body is made from a steel cast material.

10. Axle assembly (100) for a commercial vehicle, such as a HGV or a HGV trailer, comprising at least one axle body (200a to 200h) according to any one of the preceding claims.

## Revendications

1. Corps d'essieu (200a,..., 200h) pour un véhicule utilitaire, comme un véhicule poids-lourd ou une remorque de poids-lourd, qui est réalisé rigide et présente une extension longitudinale axiale (L), et qui est susceptible d'être relié au châssis du véhicule utilitaire en particulier en deux points de liaison (P1, P2) écartés axialement aux moyens de bras de guidage (401, 402), dans lequel ledit corps d'essieu est réalisé en continu ou tout au moins dans un tronçon axial avec un profilage qui, en raison de sa configuration géométrique, mène d'une part à une plus faible rigidité en torsion et d'autre part à une rigidité en flexion approximativement aussi élevée qu'un corps d'essieu avec une section transversale annulaire de même surface,
**caractérisé en ce que**
le corps d'essieu est réalisé en un matériau de fonderie.

2. Corps d'essieu (200e, 200f) selon la revendication 1, **caractérisé en ce que** la géométrie de section transversale du profilage varie sur le tracé axial (L) dudit corps d'essieu (200e, 200f).

3. Corps d'essieu (200a,..., 200g) selon la revendication 1 ou 2, **caractérisé en ce que** celui-ci comprend plusieurs tronçons axiaux, et dans lequel des tronçons axiaux voisins présentent une géométrie de section transversale différente.

4. Corps d'essieu (200e) selon l'une des revendications précédentes, **caractérisé en ce que** celui-ci comprend un rétrécissement.

5. Corps d'essieu (200a,..., 200h) selon l'une des revendications précédentes, **caractérisé en ce que** celui-ci est réalisé symétriquement par rapport à une ligne médiane (M) perpendiculaire à l'axe longitudinal (L).

6. Corps d'essieu (200a,..., 200g) selon l'une des revendications 1 à 5, **caractérisé en ce que** le profilage présente une géométrie de section transversale dans laquelle le contour intérieur et/ou le contour extérieur est réalisé sous forme de profil ondulé rond.

7. Corps d'essieu (200g, 200h) selon la revendication 1 à 5, **caractérisé en ce que** le profilage présente une géométrie de section transversale avec au moins un tronçon intérieur et plusieurs tronçons conformés dépassant radialement vers l'extérieur depuis celui-ci.

8. Corps d'essieu (200a,..., 200h) selon l'une des revendications précédentes, **caractérisé en ce que**, sur son tracé axial (L), au moins entre les points de liaison (P1, P2) pour les bras de guidage (401, 402), celui-ci est réalisé avec un moment de résistance approximativement constant à l'encontre d'une flexion.

9. Corps d'essieu (200a,..., 200h) selon l'une des revendications précédentes, **caractérisé en ce que** celui-ci est réalisé en un matériau de fonderie à base d'acier.

10. Groupe d'essieu (100) pour un véhicule utilitaire, comme un véhicule poids-lourd pour une remorque de poids-lourd, comprenant au moins un corps d'essieu (200a à 200h) selon l'une des revendications précédentes.
